# FASCICULE DE BREVET EUROPEEN

(11) **EP 4 352 401 B1**
(45) Date de publication et mention de la délivrance du brevet: **12.08.2026**
(21) Numéro de dépôt: 22735551.8
(22) Date de dépôt: 08.06.2022
(51) Int. Cl.: F17C 5/06

(54) **SYSTEME DE STOCKAGE D'HYDROGENE LIQUIDE ET DE DISTRIBUTION D'HYDROGENE GAZEUX SOUS PRESSION**
SYSTEM ZUR SPEICHERUNG VON FLÜSSIGEM WASSERSTOFF UND ZUR VERTEILUNG VON UNTER DRUCK STEHENDEM GASFÖRMIGEM WASSERSTOFF
SYSTEM FOR STORING LIQUID HYDROGEN AND FOR DISTRIBUTING PRESSURISED GASEOUS HYDROGEN

(30) Priorité: 08.06.2021 FR 2106014
(43) Date de publication de la demande: 17.04.2024
(73) Titulaire: Absolut System, 38320 Eybens (FR)
(72) Inventeur: LACAPERE, Jerome, 38960 ST ETIENNE DE CROSSEY (FR)
(74) Mandataire: Regimbeau
(86) Numéro de dépôt international: PCT/FR2022/051087
(87) Numéro de publication internationale: WO 2022/258924

(56) Documents cités:
- US-A1- 2018 346 313
- US-A1- 2020 095 113
- US-A1- 2020 217 456
- US-A1- 2021 131 611

## Description

### DOMAINE DE L'INVENTION

La présente invention concerne un système de stockage d'hydrogène liquide et de distribution d'hydrogène gazeux sous pression.

### ETAT DE LA TECHNIQUE

Un système de stockage d'hydrogène liquide et de distribution d'hydrogène gazeux doit permettre de remplir des réservoirs à une pression de 350 ou 700 bar ou plus.

Dans un tel système, on injecte typiquement de l'hydrogène liquide dans un réservoir d'expansion. Les parois du réservoir d'expansion étant à une température supérieure à celle de l'hydrogène liquide, ledit hydrogène se vaporise instantanément. Par conséquent, la pression à l'intérieur du réservoir augmente rapidement et rend le remplissage en liquide difficile.

Le remplissage d'un tel réservoir sous pression est typiquement effectué en utilisant un stockage d'hydrogène gazeux et de le compresser avec plusieurs étages de compression. L'installation des différents niveaux de pression est complexe et onéreuse.

Une autre technique consiste à utiliser un compresseur liquide à haute pression. Un tel compresseur, adapté à supporter des pressions intermédiaires élevées, est un composant également complexe et onéreux. Un système comprenant une pompe à liquide apte à comprimer de l'hydrogène à une pression jusqu'à environ 150 bar est par exemple présenté dans le document US 2018/0346313 A1. Des dispositifs pour le stockage et a distribution d'hydrogène gazeux sont par exemple décrits dans les documents US 2020/217456 A1, US 2021/131611 A1 et US 2020/095113 A1.

### EXPOSE DE L'INVENTION

Un but de l'invention est de mettre à disposition un système de stockage et de distribution d'hydrogène gazeux sous pression comprenant une source d'hydrogène liquide, un ensemble comprenant au moins deux réservoirs d'hydrogène gazeux sous pression à remplir et un dispositif de transfert agencé en liaison fluidique entre la source d'hydrogène liquide et chacun desdits réservoirs,
le dispositif de transfert comprenant :
   - une unité de transfert de liquide configurée pour transférer de l'hydrogène liquide de la source d'hydrogène liquide vers un quelconque desdits réservoirs, chaque réservoir étant agencé pour transformer l'hydrogène liquide en hydrogène gazeux sous pression par échauffement de l'hydrogène liquide,
   - un compresseur de vapeur ayant une première extrémité en amont liée fluidiquement à chacun desdits réservoirs et une seconde extrémité en aval liée fluidiquement à chacun desdits réservoirs,
   - un ensemble de vannes, de sorte qu'au moins une vanne est agencée entre chaque réservoir respectif et le compresseur de vapeur, et
   - un dispositif de commande configuré pour recevoir une pression d'un réservoir et, en fonction de ladite pression,
      ∘ émettre une commande à l'unité de transfert de liquide pour le transfert d'hydrogène liquide audit réservoir pour atteindre un niveau cible d'hydrogène liquide dans ledit réservoir et
      ∘ émettre une commande pour ouvrir et/ou fermer une ou plusieurs vannes agencées entre le compresseur de vapeur et un ou plusieurs réservoirs,
ledit compresseur de vapeur étant agencé de manière à transférer des vapeurs d'hydrogène créées durant le remplissage en hydrogène liquide d'un quelconque réservoir vers successivement chacun des autres réservoirs en fonction de l'ouverture et/ou fermeture des vannes, en comprimant lesdites vapeurs à une pression supérieure à la pression d'hydrogène gazeux dans le réservoir pendant le remplissage par de l'hydrogène liquide.

De préférence, la pression d'hydrogène gazeux dans chaque réservoir est comprise entre 200 et 1900 bar ou plus avantageusement entre 200 et 1200 bar.

Avantageusement, l'unité de transfert de liquide est dépourvue d'un compresseur de liquide.

L'invention se rapporte aussi à un procédé de stockage et de distribution d'hydrogène gazeux sous pression, comprenant :
∘ la fourniture d'un système de stockage et de distribution tel que décrit ci-dessus,
   ∘ le remplissage d'un premier réservoir en hydrogène liquide par l'intermédiaire de l'unité de transfert de liquide (25), l'hydrogène liquide étant transformé, dans ledit premier réservoir, en hydrogène gazeux sous pression par échauffement de l'hydrogène liquide, et
   ∘ le transfert des vapeurs d'hydrogène créées pendant le remplissage en hydrogène liquide dudit premier réservoir vers au moins un second réservoir par l'intermédiaire du compresseur de vapeur (10) en comprimant lesdites vapeurs à une pression supérieure à la pression d'hydrogène dans ledit premier réservoir.

De manière avantageuse, l'hydrogène liquide est transformé, dans le premier réservoir, en hydrogène gazeux sous une pression comprise entre 200 et 1900 bar ou plus avantageusement entre 200 et 1200 bar.

De préférence, le procédé comprend en outre une étape de mesure de pression et/ou une étape de mesure de température et/ou une étape de mesure de débit de gaz transféré et/ou une étape de mesure de remplissage d'un réservoir pour déterminer si un niveau cible de remplissage en hydrogène liquide est atteint dans le premier réservoir.

### BREVE DESCRIPTION DES FIGURES

D'autres caractéristiques et avantages de l'invention ressortiront de la description détaillée qui va suivre, en référence aux dessins annexés, sur lesquels :
- la figure 1 est un schéma d'un système de stockage d'hydrogène liquide et de distribution d'hydrogène gazeux sous pression selon un mode de réalisation de l'invention ;
- la figure 2 est un schéma d'un autre système de stockage d'hydrogène liquide et de distribution d'hydrogène gazeux sous pression.

### DESCRIPTION DETAILLEE DE MODES DE REALISATION

Un système de stockage d'hydrogène liquide et de distribution d'hydrogène gazeux selon l'invention permet de remplir des réservoirs d'hydrogène gazeux à une pression de 350 ou 700 bar, ou à une autre pression pouvant monter jusqu'à 1900 bar, à partir d'une quantité d'hydrogène liquide. Le système transforme l'hydrogène liquide en hydrogène gazeux par expansion thermique, en utilisant un compresseur à gaz pour la compression des vapeurs crées pendant le transfert de l'hydrogène liquide vers un réservoir 31-35 d'expansion.

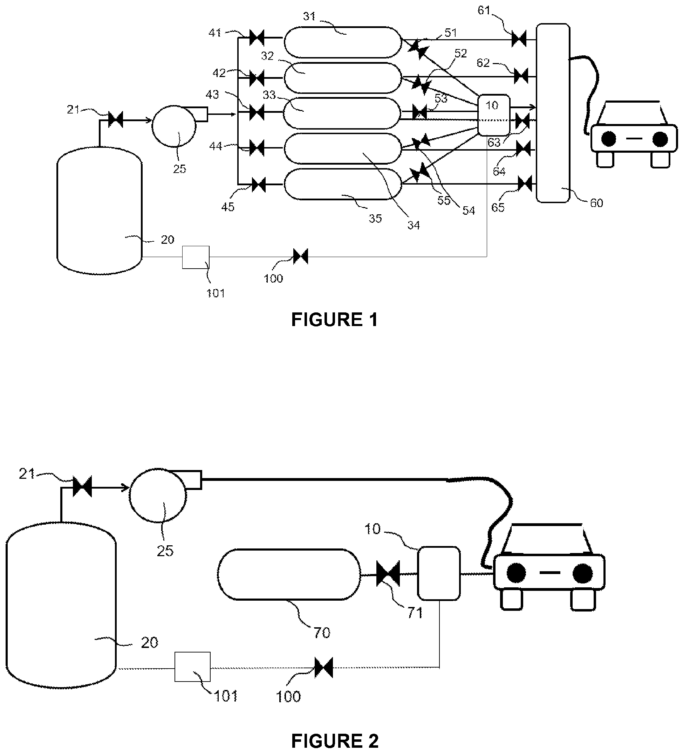

La figure 1 illustre un système selon l'invention comprenant un compresseur de gaz 10, un réservoir 20 d'hydrogène liquide, un ensemble de réservoirs 31-35 d'hydrogène gazeux à remplir, et une unité de transfert de liquide 25 apte à transférer l'hydrogène liquide du réservoir 20 vers au moins un des réservoirs 31-35. Le nombre de réservoirs est indiqué à titre purement illustratif et non limitatif. Le nombre de réservoirs 31-35 est typiquement compris entre 2 et 5 et peut être plus élevé dans certains modes de réalisation.

Le réservoir 20 d'hydrogène liquide comprend un déverseur 101 permettant de conserver une pression constante dans le réservoir 20. Un tel déverseur est utilisé pour réguler la pression aval de la vanne 100. Lorsque la pression dans le réservoir 20 est trop faible, le déverseur laisse passer de l'hydrogène gazeux du compresseur de gaz vers le réservoir 20.

Le système comprend en outre un certain nombre de vannes 41-45, 51-55 et 61-65 à chaque entrée et chaque sortie des réservoirs 31-35 à remplir. Le réservoir 20 est thermiquement isolé et adapté pour stocker une quantité d'hydrogène liquide. Le réservoir 20 contient de l'hydrogène liquide à une température comprise entre 18 K et 27 K à une pression entre 1 et 5 bar.

L'unité de transfert de liquide 25 peut être typiquement une pompe de liquide à basse pression, apte à transférer du liquide dans un récipient ayant une pression sensiblement identique ou avec une pression jusqu'à 20% supérieure à la pression du stockage. De manière illustrative et non limitative, l'unité de transfert de liquide 25 peut être une pompe de liquide du type centrifuge.

Dans d'autres modes de réalisation, l'unité de transfert de liquide 25 peut être un autre type de pompe ou un dispositif apte à transférer un liquide par une différence de pression, ne nécessitant pas de pompe.

L'entrée de ladite unité de transfert de liquide 25 est en communication fluidique avec le réservoir 20 d'hydrogène liquide par intermédiaire d'une vanne 21.

Chaque réservoir 31-35 d'hydrogène gazeux à remplir présente une forme adaptée pour supporter la pression de l'hydrogène gazeux maximale du système. Ladite pression maximale est supérieure à la pression utilisée dans l'application envisagée. Par exemple, si l'application envisagée est le remplissage d'un réservoir d'un véhicule à une pression de 700 bar, la pression maximale du système est d'environ 1900 bar.

De manière avantageuse, la forme de chacun des réservoirs 31-35 est une forme cylindrique avec des extrémités en forme de dôme. Le cylindre peut être agencée verticalement ou horizontalement. Le volume de chaque réservoir 31-35 peut être identique. De manière alternative, au moins deux réservoirs peuvent avoir un volume différent.

Chaque réservoir 31-35 comprend une isolation thermique afin d'éviter la liquéfaction d'air sur la paroi extérieure. Une telle isolation peut consister çà titre d'exemple purement illustratif et non limitatif, d'une couche de mousse du polyuréthane ou d'une autre mousse thermiquement isolante. Une telle couche de mousse a typiquement une épaisseur d'environ 20 cm.

Chaque réservoir 31-35 comporte typiquement un ou plusieurs capteurs de température apte à mesurer la température à l'intérieur du réservoir 31-35, et d'un capteur de pression apte à mesurer la pression à l'intérieur du réservoir.

Chaque réservoir 31-35 comprend une vanne d'hydrogène liquide 41-45 et deux vannes de gaz 51-55 et 61-65. De préférence, les vannes de gaz 51-55 et 61-65 sont agencées sur une extrémité supérieure de chacun des réservoirs 31-35, par exemple au niveau du dôme supérieur quand le cylindre est agencé verticalement.

La sortie de l'unité de transfert de liquide 25 est en communication fluidique avec l'ensemble des réservoirs 31-35 par l'intermédiaire d'un conduit et d'une vanne respective 41-45 pour chacun des réservoirs 31-35.

Lesdites entrées/sorties de vapeur comportant les vannes 51-55 sont en communication avec un compresseur de vapeur 10 agencé de manière à prélever de la vapeur d'un quelconque réservoir 31-35 et comprimer ladite vapeur dans un quelconque des autres réservoirs 31-35. Le compresseur de vapeur 10 est apte à comprimer les vapeurs froides et les vapeurs à température ambiante, c'est-à-dire la température environnant le système (en général, on considère que la température ambiante est comprise entre 280 et 300 K). L'homme du métier saura choisir un compresseur adapté à la dimension du système.

L'entrée/sortie de gaz de chacun des réservoirs 31-35 est en communication fluidique avec une station de remplissage 60 par l'intermédiaire des vannes respectives 61-65. La sortie du compresseur de vapeur 10 est également en communication fluidique avec la station 60. Ladite station de remplissage 60 comporte un dispositif permettant d'alimenter une application, par exemple le réservoir d'un véhicule, par l'hydrogène gazeux présent dans les réservoirs 31-35. La station de remplissage peut être mise en liaison fluidique avec la source d'hydrogène par l'intermédiaire de la vanne 100.

En outre, la station de remplissage 60 comporte typiquement des capteurs de température et de pression, un dispositif de régulation de température, un capteur apte à mesurer le débit du gaz transféré et un ensemble de capteurs de température permettant de mesurer le niveau de remplissage en hydrogène liquide. La station de remplissage 60 peut également comporter des dispositifs de sécurité pour la manipulation de l'hydrogène gazeux sous pression.

Le dispositif de régulation de température de la station de remplissage 60 peut être plus simple que dans une station de remplissage conventionnelle. Par exemple, si on utilise les réservoirs 31-35 à une température inférieure à la température ambiante, le dispositif de régulation ne nécessite pas de moyen de refroidissement. A titre d'exemple purement illustratif et non limitatif, l'hydrogène gazeux dans les réservoirs 31-35 peut être utilisé à une température d'environ 230 K durant le remplissage sans être chauffé à température ambiante pendant les étapes de compression.

Le système comprend un dispositif de commande et de régulation des vannes permettant de commander les transferts de liquide et de vapeur entre les réservoirs respectifs.

Avantageusement, le dispositif de commande comprend au moins un processeur configuré pour mettre en oeuvre un ou plusieurs programmes d'ordinateur. Le processeur est conçu pour analyser les données mesurées par les capteurs de température et les capteurs de pression agencés dans les réservoirs respectifs et pour piloter l'ouverture et/ou la fermeture des vannes afin d'obtenir une pression cible dans chaque réservoir. Ledit processeur est, le cas échéant, configuré pour analyser les données mesurées par le capteur de mesure le débit de gaz transféré et l'ensemble de capteurs permettant de mesurer le niveau de remplissage en hydrogène liquide.

Le dispositif de commande peut recevoir une pression cible ou un niveau cible d'hydrogène liquide et des pressions cibles dans les réservoirs. Les pressions cibles dans les réservoirs respectifs peuvent être identiques ou différentes.

Le nombre de réservoirs 31-35 dépend du cycle d'utilisation de la station de remplissage 60, notamment de la quantité d'hydrogène à distribuer et du nombre de remplissages journaliers, des pressions maximales des réservoirs (350 ou 700 bar ou une autre pression), du choix des pressions maximales admissibles dans les réservoirs 31-35 et de la pression effective restante dans les réservoirs des véhicules devant être remplis.

Le système de stockage et de distribution ne comprend aucun compresseur agencé entre la source d'hydrogène liquide et les réservoirs 31-35 d'hydrogène gazeux. En particulier, le système ne comprend pas de compresseur de liquide. Cela permet la mise à disposition de l'hydrogène gazeux à moindre coût, en utilisant des composants moins complexes et en facilitant la maintenance du système.

On va maintenant décrire le fonctionnement du système de stockage et de distribution d'hydrogène gazeux sous pression.

Initialement, avant le remplissage, les réservoirs 31-35 sont à une pression faible proche de 0 ou 1 bar. Le réservoir 20 comprend de l'hydrogène liquide à une température proche de -250°C.

Un premier réservoir, par exemple le réservoir 31, est rempli d'hydrogène liquide à partir du réservoir 20 par intermédiaire de l'unité de transfert de liquide 25. Dans ce cas, les vannes 21 et 41 sont ouvertes et les vannes 42-45 sont fermées.

Le remplissage est, dans un premier temps, effectué jusqu'à l'équilibrage des pressions entre le réservoir 20 d'hydrogène liquide et le réservoir 31 à remplir.

Ensuite, la pompe 25 et le compresseur 10 sont mis en fonctionnement. La vanne 100 est ouverte et le déverseur 101 est utilisé pour maintenir une pression constante dans le réservoir 20 d'hydrogène liquide. La différence de pression entre le réservoir 20 de stockage d'hydrogène liquide et le réservoir 31 en cours de remplissage est maintenue grâce au compresseur de vapeur 10 qui prélève la vapeur du réservoir 31 vers l'un des réservoirs 32, 33, 34, et 35, par exemple le réservoir 32. Ainsi, la pression dans le réservoir à remplir et maintenue à une valeur constante comprise entre 1 et 5 bar.

Si la pression dans le réservoir 31 devient supérieure à 5 bar et est en croissance continue, le dispositif de commande diminue le débit de la pompe 25 jusqu'à la stabilisation de la pression.

Pendant le remplissage du réservoir 31, la vanne 51 est ouverte pour le prélèvement de la vapeur. La vanne 52 est ouverte pour la compression de la vapeur vers le réservoir 32. Le compresseur de vapeur 10 est connecté de manière à avoir une connexion fluidique avec le réservoir 31 en amont, et une connexion fluidique avec le réservoir 32 en aval.

Quand le réservoir 32 atteint un remplissage à une pression prédéfinie, le dispositif de commande ferme la vanne 52. Typiquement ladite pression prédéfinie est comprise entre 10 et 200 bar selon le profil d'utilisation du système.

Le dispositif de commande arrête alors la pompe 25 et le compresseur 10 et ferme toutes les vannes.

Le dispositif de commande ouvre ensuite la vanne 53-55 d'un autre des réservoirs 33-35 et prélève la vapeur du réservoir 31 vers ledit réservoir, de manière à remplir successivement tous les réservoirs restants par la vapeur d'hydrogène. Le compresseur de vapeur 10 est connecté de manière à avoir une connexion fluidique en aval avec le réservoir en cours de remplissage par la vapeur prélevé du réservoir 31.

Les vannes 52-55 des réservoirs remplis par la vapeur d'hydrogène à la pression souhaitée, par exemple 200 bar, sont fermées quand le remplissage est terminé.

Quand le dispositif de commande reçoit une valeur d'un des capteurs de remplissage du réservoir 31 que le niveau d'hydrogène souhaité est atteint, la vanne de remplissage dudit réservoir 31 est fermée, le remplissage par l'hydrogène est arrêté et tous les réservoirs 31 à 35 sont hermétiquement fermés. Ledit niveau de liquide dépend de la pression finale souhaitée. Par exemple, pour une pression finale souhaitée de 1200 bar, le niveau de remplissage en liquide est d'environ 78%. Pour une pression maximale de l'ordre de 1900 bar, le niveau de remplissage liquide sera proche de 100 %.

L'énergie apportée par l'environnement plus chaud que le liquide cryogénique permet de vaporiser l'hydrogène et ainsi d'effectuer une auto-pressurisation du réservoir 31. Dans les réservoirs 32-35, une augmentation de la pression est obtenue par l'échauffement du gaz froid présent dans lesdits réservoirs suite à la compression des vapeurs froides prélevées du réservoir 31. Le gaz peut être échauffé jusqu'à la température ambiante qui est typiquement comprise entre 280 et 300 K.

Par exemple, un réservoir comportant de l'hydrogène gazeux froid à une pression de 200 bar peut atteindre une pression entre 400 et 500 bar à température ambiante.

De manière alternative, le gaz peut être partiellement chauffé jusqu'à une température inférieure à la température ambiante, par exemple d'environ 230 K. La température inférieure à la température ambiante peut être stabilisé et contrôlé par un dispositif adapté. De manière alternative, l'hydrogène gazeux peut être utilisé pendant la montée en température sans atteindre une stabilisation thermique.

### Séquence de pressurisation

Le dispositif de commande reçoit des informations sur la pression dans tous les réservoirs et est configuré pour commander l'ouverture et fermeture des vannes. Lorsque le système reçoit une valeur seuil de l'un des capteurs de pression dans un des réservoirs 31 à 35, il déclenche une étape suivante dans une séquence de pressurisation prédéfinie.

Par exemple, pour un système tel que représenté sur la figure 1, la séquence de pressurisation des réservoirs 31 à 35 peut comprendre les étapes suivantes, toutes les vannes étant initialement fermées :
- ouverture des vannes 21, 41 et 51 pour établir une liaison fluidique entre la source d'hydrogène liquide 20, de la pompe 25, un premier réservoir 31 et le compresseur de vapeur 10
- remplissage en hydrogène liquide du premier réservoir 31 jusqu'à l'équilibrage des pressions entre les réservoirs 20 et 31 ;
- ouverture des vannes 52 et 100 pour établir une liaison fluidique entre le compresseur de vapeur 10 et le deuxième réservoir 32 et entre le compresseur de vapeur et la source d'hydrogène liquide ;
- ouverture de la vanne 100 et mise en fonctionnement du déverseur 101 pour obtenir une pression constante dans le réservoir 20 ;
- démarrage de la pompe 25 pour remplir le premier réservoir 31 d'hydrogène liquide et démarrage du compresseur 10 pour transférer la vapeur du premier réservoir 31 vers le deuxième réservoir 32 ;
- remplissage du réservoir 31 en maintenant une pression constante dans le réservoir 31 ;
- si la pression du réservoir 31 devient supérieure à 5 bar, diminution du débit de la pompe 20 ;
- arrêt du remplissage sur une consigne de niveau du réservoir 31 à 90 % ;
- arrêt de la pompe 25 et du compresseur 10 et fermeture de toutes les vannes.

Ladite séquence est ensuite répétée pour le remplissage du réservoir 32 avec activation des vannes 21, 42, 53 et 100. Par la suite, la séquence est exécutée de nouveau pour chacun des réservoirs suivants. On peut programmer le niveau de remplissage en liquide selon la pression souhaitée selon le tableau 1.

**Tableau 1 : Niveau de remplissage en fonction de la pression désirée**

| Niveau de remplissage liquide à 5 bar | | Pression maximale stabilisée à 27°C | |
|---|---|---|---|
| | 90 % | | 1200 bar |
| | 80 % | | 1000 bar |
| | 70 % | | 807 bar |
| | 63.6 % | | 700 bar |
| | 60 % | | 643 bar |
| | 50 % | | 500 bar |
| | 40 % | | 375 bar |
| | 37.8 % | | 350 bar |
| | 30 % | | 265 bar |
| | 20 % | | 170 bar |
| | 10 % | | 80 bar |

### Utilisation

Le gaz sous pression dans les réservoirs 31 et 32-35 peut ensuite être utilisé pour alimenter une application en hydrogène gazeux sous pression. L'alimentation est effectuée par équilibrage de pressions entre successivement chacun des réservoirs 31-35 et le réservoir du véhicule à remplir, en passant par les vannes 62-65 respectives et la station de remplissage 60. On utilise en priorité le réservoir 31-35 ayant la plus basse pression. Quand la pression d'équilibre entre ledit réservoir 31-35 ayant la plus basse pression et le réservoir du véhicule est atteinte, on continue le remplissage à partir du réservoir 31-35 présentant la pression la plus basse supérieure à ladite pression d'équilibre. Ainsi on augmente successivement la pression de remplissage et utilise le réservoir 31-35 présentant la plus haute pression d'hydrogène en dernier. Dans la suite du texte, on suppose que la pression est croissante du réservoir 35 au réservoir 31.

Le dispositif de commande est également utilisé pour recevoir des données lors du remplissage du réservoir d'une application, et pour la commande des vannes lors de ce remplissage.

Une séquence de remplissage d'une telle application, par exemple un bateau ou un automobile, peut comprendre les étapes suivantes :
- ouverture de la vanne 65 et remplissage du réservoir de l'application à partir du réservoir 35 ;
- détection de l'équilibre des pressions du réservoir de l'application et du réservoir 35 ;
- fermeture de la vanne 65 ;
- ouverture de la vanne 64 et remplissage du réservoir de l'application à partir du réservoir 34 ;
- fermeture de la vanne 64.

Par la suite, les réservoirs 33, 32, 31 sont utilisés de la même manière pour le remplissage de l'application.

Si la pression d'un des réservoirs 31-35 est supérieure à la pression dans le réservoir de l'application, on ouvre la vanne 61-65 correspondant à ce réservoir jusqu'à l'équilibrage des pressions. On ferme par la suite cette vanne 61-65.

L'hydrogène utilisé pour le remplissage du réservoir de l'application peut en outre être refroidi par un échangeur qui échangera l'énergie thermique avec un réservoir en train de se réchauffer.

Après la distribution de l'hydrogène gazeux, le réservoir ayant la pression la plus faible sera utilisé pour un nouveau remplissage d'hydrogène liquide.

Avant le remplissage, ce réservoir présentant la plus faible pression est vidé jusqu'à une pression inférieure à 5 bar par le compresseur 10 qui est utilisé pour transférer le gaz du réservoir de plus faible pression au deuxième réservoir de plus faible pression.

La vapeur est prélevée dudit réservoir de plus faible pression par le compresseur de vapeur 10 vers les autres réservoirs 31-35 respectifs de manière consécutive, en commençant typiquement par le réservoir 31-35 ayant la plus passe pression, pendant le remplissage en hydrogène liquide.

Lorsqu'un réservoir a une pression trop faible pour l'utilisation de distribution de gaz mais trop forte pour être rempli de liquide à partir du réservoir 20 de liquide, on utilise le compresseur de vapeur 10 pour baisser la pression dudit réservoir et transférer la vapeur à un réservoir à plus haute pression. Lorsque la pression devient plus faible que la pression du réservoir contenant le liquide, le transfert de liquide peut être effectué comme dans le remplissage initial.

Ainsi les réservoirs 31-35 sont remplis à tour de rôle, lorsqu'ils atteignent une pression faible pour pouvoir être utilisés pour la distribution d'hydrogène gazeux.

Un tel système peut être utilisé afin d'alimenter une station de remplissage 60 d'hydrogène gazeux conçue pour remplir des réservoirs de véhicules tels que des camions, des voitures ou tout autre véhicule. Il permet de recomprimer de gaz évaporé d'un stockage d'hydrogène liquide et ainsi récupérer toute la quantité d'hydrogène sans perte.

En outre, le système peut être utilisé pour la gestion des vapeurs générées lors du stationnement par exemple d'un camion comportant un réservoir d'hydrogène liquide. Pendant un stationnement de plusieurs heures à température ambiante, on constate une évaporation partielle de l'hydrogène liquide. Les vapeurs générées peuvent être récupérées via une compression vers un des réservoirs et réintroduits dans une station de remplissage 60 d'hydrogène gazeux.

Dans un autre mode de réalisation, un tel système de distribution peut être utilisé pour remplir directement le réservoir d'un véhicule à partir d'une quantité d'hydrogène liquide, en utilisant un compresseur à gaz pour la compression des vapeurs crées pendant le transfert de l'hydrogène liquide vers un réservoir tampon 70.

La figure 2 illustre un système de stockage d'hydrogène liquide et de distribution d'hydrogène gazeux sous pression selon ledit mode de réalisation, comprenant une source d'hydrogène liquide 20, un dispositif de raccordement adapté pour être raccordé à un réservoir d'un véhicule à remplir avec de l'hydrogène liquide, ledit réservoir étant agencé pour transformer l'hydrogène liquide en hydrogène gazeux sous pression par échauffement de l'hydrogène liquide. Ledit dispositif de raccordement est adapté pour introduire de l'hydrogène liquide dans le réservoir du véhicule et pour prélever des vapeurs d'hydrogène dans ledit réservoir. Le système comprend en outre au moins un réservoir tampon 70 adapté pour être rempli d'hydrogène gazeux, et un dispositif de transfert agencé en liaison fluidique entre la source d'hydrogène liquide, le dispositif de raccordement, et ledit au moins un réservoir d'hydrogène gazeux à remplir.

Le dispositif de transfert comprend une unité de transfert de liquide 25 agencée pour transférer de l'hydrogène liquide de la source d'hydrogène liquide 20 vers le réservoir du véhicule par le dispositif de raccordement. L'unité de transfert de liquide 25 peut être typiquement une pompe de liquide à basse pression. Ledit dispositif de transfert comprend en outre un compresseur de vapeur 10 comprenant une entrée en liaison fluidique avec le dispositif de raccordement et une sortie en liaison fluidique avec ledit au moins un réservoir tampon. Ledit compresseur de vapeur 10 est agencé de manière à transférer des vapeurs d'hydrogène créées durant le remplissage en hydrogène liquide du réservoir du véhicule vers ledit au moins un réservoir tampon 70, en comprimant lesdites vapeurs à une pression supérieure à la pression d'hydrogène gazeux dans le réservoir du véhicule pendant le remplissage par de l'hydrogène liquide.

Une séquence de remplissage dans un tel système peut comprendre les étapes suivantes :
- détermination de la pression dans le réservoir de l'application, le réservoir tampon 70 et le réservoir 20 ;
- si la pression du réservoir de l'application est supérieure à la pression du réservoir 20 et la pression dans le réservoir 70 est inférieure à la pression du réservoir de l'application, ouverture de la vanne 71 jusqu'à l'équilibrage de pression entre le réservoir tampon 70 et le réservoir de l'application ;
- mise en fonctionnement du compresseur 10 et, le cas échéant, ouverture de la vanne 71 pour vidange du réservoir de l'application jusqu'à atteindre une pression égale ou inférieure à la pression réservoir 20 ;
- si la pression du réservoir de l'application est inférieure à la pression du réservoir 20, démarrage de la pompe 25 et du compresseur 10 avec l'ouverture des vannes 21 et 71 et de la vanne 100 vers réservoir 20 et mise en fonctionnement du déverseur 101 en aval de la vanne 100;
- quand le niveau de remplissage en liquide du réservoir de l'application atteint une valeur prédéfinie selon le tableau 2, arrêt du remplissage et fermeture de toutes les vannes.
- détermination de la pression dans le réservoir de l'application, le réservoir tampon 70 et le réservoir 20 ;
- si la pression du réservoir de l'application est supérieure à la pression du réservoir 20 et la pression dans le réservoir 70 est inférieure à la pression du réservoir de l'application, ouverture de la vanne 71 jusqu'à l'équilibrage de pression entre le réservoir tampon 70 et le réservoir de l'application ;
- mise en fonctionnement du compresseur 10 et, le cas échéant, ouverture de la vanne 71 pour vidange du réservoir de l'application jusqu'à atteindre une pression égale ou inférieure à la pression réservoir 20 ;
- si la pression du réservoir de l'application est inférieure à la pression du réservoir 20, démarrage de la pompe 25 et du compresseur 10 avec l'ouverture des vannes 21 et 71 et de la vanne 100 vers réservoir 20 et mise en fonctionnement du déverseur 101 en aval de la vanne 100;
- quand le niveau de remplissage en liquide du réservoir de l'application atteint une valeur prédéfinie selon le tableau 2, arrêt du remplissage et fermeture de toutes les vannes.

**Tableau 2 : Remplissage du réservoir d'une application en fonction de la pression désirée**

| Niveau de remplissage liquide à 5 bar | | Pression maximale stabilisée à 27°C | |
|---|---|---|---|
| | 63.6 % | | 700 bar |
| | 50 % | | 500 bar |
| | 37.8 % | | 350 bar |

## Revendications

1. Système de stockage d'hydrogène liquide et de distribution d'hydrogène gazeux sous pression comprenant une source d'hydrogène liquide (20), un ensemble comprenant au moins deux réservoirs (31-35) d'hydrogène gazeux sous pression à remplir et un dispositif de transfert configuré en liaison fluidique entre la source d'hydrogène liquide et chacun desdits réservoirs,
le dispositif de transfert comprenant :
• une unité de transfert de liquide (25) configurée pour transférer de l'hydrogène liquide de la source d'hydrogène liquide (20) vers un quelconque desdits réservoirs, chaque réservoir étant configuré pour transformer l'hydrogène liquide en hydrogène gazeux sous pression par échauffement de l'hydrogène liquide,
• un compresseur de vapeur (10) ayant une première extrémité en amont liée fluidiquement à chacun desdits réservoirs et une seconde extrémité en aval liée fluidiquement à chacun desdits réservoirs,
• un ensemble de vannes (51-55), de sorte qu'au moins une vanne est agencée entre chaque réservoir (31-35) respectif et le compresseur de vapeur (10), et
• un dispositif de commande configuré pour recevoir une pression d'un réservoir (31-35) et, en fonction de ladite pression,
∘ émettre une commande à l'unité de transfert de liquide pour le transfert d'hydrogène liquide audit réservoir (31-35) pour atteindre un niveau cible d'hydrogène liquide dans ledit réservoir (31-35) et
∘ émettre une commande pour ouvrir et/ou fermer une ou plusieurs vannes (51-55) agencées entre le compresseur de vapeur (10) et un ou plusieurs réservoirs (31-35),
ledit compresseur de vapeur (10) étant configuré de manière à transférer des vapeurs d'hydrogène créées durant le remplissage en hydrogène liquide d'un quelconque réservoir vers successivement chacun des autres réservoirs en fonction de l'ouverture et/ou fermeture des vannes (51-55), en comprimant lesdites vapeurs à une pression supérieure à la pression d'hydrogène gazeux dans le réservoir pendant le remplissage par de l'hydrogène liquide.

2. Système selon la revendication 1, dans lequel la pression d'hydrogène gazeux dans chaque réservoir est comprise entre 200 et 1900 bar ou plus avantageusement entre 200 et 1200 bar.

3. Système selon la revendication 1 ou la revendication 2, dans lequel l'unité de transfert de liquide est dépourvue d'un compresseur de liquide.

4. Procédé de stockage et de distribution d'hydrogène gazeux sous pression, comprenant :
∘ la fourniture d'un système de stockage et de distribution selon l'une des revendications précédentes,
∘ le remplissage d'un premier réservoir en hydrogène liquide par l'intermédiaire de l'unité de transfert de liquide (25), l'hydrogène liquide étant transformé, dans ledit premier réservoir, en hydrogène gazeux sous pression par échauffement de l'hydrogène liquide, et
∘ le transfert des vapeurs d'hydrogène créées pendant le remplissage en hydrogène liquide dudit premier réservoir vers au moins un second réservoir par l'intermédiaire du compresseur de vapeur (10) en comprimant lesdites vapeurs à une pression supérieure à la pression d'hydrogène dans ledit premier réservoir.

5. Procédé de de stockage et de distribution d'hydrogène gazeux sous pression selon la revendication 3, dans lequel l'hydrogène liquide est transformé, dans le premier réservoir, en hydrogène gazeux sous une pression comprise entre 200 et 1900 bar ou plus avantageusement entre 200 et 1200 bar.

6. Procédé de de stockage et de distribution d'hydrogène gazeux sous pression selon la revendication 3 ou la revendication 4, comprenant en outre une étape de mesure de pression et/ou une étape de mesure de température et/ou une étape de mesure de débit de gaz transféré et/ou une étape de mesure de remplissage d'un réservoir pour déterminer si un niveau cible de remplissage en hydrogène liquide est atteint dans le premier réservoir.

## Patentansprüche

1. System zur Speicherung von flüssigem Wasserstoff und zur Verteilung von gasförmigem Wasserstoff unter Druck, umfassend eine Quelle für flüssigen Wasserstoff (20), eine Anordnung umfassend mindestens zwei zu befüllende Druckbehälter (31-35) für gasförmigen Wasserstoff und eine Transfervorrichtung, die in fluidischer Verbindung zwischen der Quelle für flüssigen Wasserstoff und jedem der genannten Behälter konfiguriert ist,
wobei die Transfervorrichtung umfasst:
• eine Flüssigkeitstransfereinheit (25), die dazu konfiguriert ist, flüssigen Wasserstoff von der Quelle für flüssigen Wasserstoff (20) zu einem beliebigen der genannten Behälter zu transferieren, wobei jeder Behälter dazu konfiguriert ist, den flüssigen Wasserstoff durch Erwärmung des flüssigen Wasserstoffs in gasförmigen Wasserstoff unter Druck umzuwandeln,
• einen Dampfverdichter (10) mit einem ersten stromaufwärtigen Ende, das fluidisch mit jedem der genannten Behälter verbunden ist, und einem zweiten stromabwärtigen Ende, das fluidisch mit jedem der genannten Behälter verbunden ist,
• eine Ventilanordnung (51-55), sodass mindestens ein Ventil zwischen jedem jeweiligen Behälter (31-35) und dem Dampfverdichter (10) angeordnet ist, und
• eine Steuereinrichtung, die dazu konfiguriert ist, einen Druck eines Behälters (31-35) zu empfangen und in Abhängigkeit von genanntem Druck
∘ einen Befehl an die Flüssigkeitstransfereinheit zum Transfer von flüssigem Wasserstoff zu dem genannten Behälter (31-35) auszugeben, um einen Ziel-Füllstand an flüssigem Wasserstoff in dem genannten Behälter (31-35) zu erreichen, und
∘ einen Befehl zum Öffnen und/oder Schließen eines oder mehrerer Ventile (51-55) auszugeben, die zwischen dem Dampfverdichter (10) und einem oder mehreren Behältern (31-35) angeordnet sind,
wobei der genannte Dampfverdichter (10) derart konfiguriert ist, dass er während der Befüllung eines beliebigen Behälters mit flüssigem Wasserstoff erzeugte Wasserstoffdämpfe nacheinander zu jedem der anderen Behälter transferiert, in Abhängigkeit vom Öffnen und/oder Schließen der Ventile (51-55), indem er die genannten Dämpfe auf einen Druck verdichtet, der höher ist als der Druck des gasförmigen Wasserstoffs im Behälter während der Befüllung mit flüssigem Wasserstoff.

2. System nach Anspruch 1, wobei der Druck des gasförmigen Wasserstoffs in jedem Behälter zwischen 200 und 1900 bar oder vorzugsweise zwischen 200 und 1200 bar liegt.

3. System nach Anspruch 1 oder Anspruch 2, wobei die Flüssigkeitstransfereinheit keinen Flüssigkeitsverdichter aufweist.

4. Verfahren zur Speicherung und Verteilung von gasförmigem Wasserstoff unter Druck, umfassend:
• die Bereitstellung eines Speicher- und Verteilungssystems nach einem der vorhergehenden Ansprüche,
• das Befüllen eines ersten Behälters mit flüssigem Wasserstoff mittels der Flüssigkeitstransfereinheit (25), wobei der flüssige Wasserstoff in dem genannten ersten Behälter durch Erwärmung des flüssigen Wasserstoffs in gasförmigen Wasserstoff unter Druck umgewandelt wird, und
• das Transferieren der während der Befüllung des genannten ersten Behälters mit flüssigem Wasserstoff erzeugten Wasserstoffdämpfe zu mindestens einem zweiten Behälter mittels des Dampfverdichters (10), indem die genannten Dämpfe auf einen Druck verdichtet werden, der höher ist als der Wasserstoffdruck in dem genannten ersten Behälter.

5. Verfahren zur Speicherung und Verteilung von gasförmigem Wasserstoff unter Druck nach Anspruch 3, wobei der flüssige Wasserstoff in dem ersten Behälter in gasförmigen Wasserstoff unter einem Druck zwischen 200 und 1900 bar oder vorzugsweise zwischen 200 und 1200 bar umgewandelt wird.

6. Verfahren zur Speicherung und Verteilung von gasförmigem Wasserstoff unter Druck nach Anspruch 3 oder Anspruch 4, ferner umfassend einen Druckmessschritt und/oder einen Temperaturmessschritt und/oder einen Messschritt des transferierten Gasdurchsatzes und/oder einen Messschritt des Füllstands eines Behälters, um zu bestimmen, ob ein Ziel-Füllstand der Befüllung mit flüssigem Wasserstoff in dem ersten Behälter erreicht ist.

## Claims

1. A system for storing liquid hydrogen and distributing pressurised gaseous hydrogen comprising a source of liquid hydrogen (20), an assembly comprising at least two tanks (31-35) of pressurised gaseous hydrogen to be filled and a transfer device configured in fluid communication between the liquid hydrogen source and each of said tanks,
the transfer device comprising:
• a liquid transfer unit (25) configured to transfer liquid hydrogen from the liquid hydrogen source (20) to any of said tanks, each tank being configured to transform the liquid hydrogen into pressurised gaseous hydrogen by heating the liquid hydrogen,
• a vapour compressor (10) having a first upstream end fluidly connected to each of said tanks and a second downstream end fluidly connected to each of said tanks, a set of valves (51-55), so that at least one valve is arranged between each respective tank (31-35) and the vapour compressor (10), and
• a control device configured to receive pressure from a tank (31-35) and, depending on said pressure,
∘ to issue a command to the liquid transfer unit in order to transfer liquid hydrogen to said tank (31-35) to achieve a target level of liquid hydrogen in said tank (31-35), and
∘ to issue a command to open and/or close one or more valves (51-55) arranged between the vapour compressor (10) and one or more tanks (31-35),
said vapour compressor being configured so as to transfer hydrogen vapours created during the filling of any tank with liquid hydrogen to each of the other tanks in succession, as a function of the opening and/or closing of the valves (51-55), by compressing said vapours to a pressure greater than the pressure of gaseous hydrogen in the tank during filling with liquid hydrogen.

2. The system according to claim 1 wherein the gaseous hydrogen pressure in each tank is between 200 and 1900 bar or more preferably between 200 and 1200 bar.

3. The system according to claim 1 or claim 2, wherein the liquid transfer unit does not have a liquid compressor.

4. A process for storing and distributing pressurised gaseous hydrogen, comprising:
∘ providing a storage and distribution system according to one of the preceding claims,
∘ filling a first tank with liquid hydrogen by means of the liquid transfer unit (25), the liquid hydrogen being transformed, in said first tank, into pressurised gaseous hydrogen by heating the liquid hydrogen, and
∘ transferring the hydrogen vapours created during the filling of said first tank with liquid hydrogen to at least one second tank by means of the vapour compressor (10) by compressing said vapours to a pressure greater than the hydrogen pressure in said first tank.

5. The process for storing and distributing pressurised gaseous hydrogen according to claim 3, wherein the liquid hydrogen is transformed, in the first tank, into gaseous hydrogen under a pressure of between 200 and 1900 bar or more advantageously between 200 and 1200 bar.

6. The process for storing and distributing pressurised gaseous hydrogen according to claim 3 or claim 4, further comprising a pressure measurement step and/or a temperature measurement step and/or a transferred gas flow measurement step and/or a tank filling measurement step to determine if a target liquid hydrogen filling level is reached in the first tank.
